# EUROPEAN PATENT SPECIFICATION

(11) **EP 4 053 509 B1**
(45) Date of publication and mention of the grant of the patent: **12.02.2025**
(21) Application number: 22150586.0
(22) Date of filing: 07.01.2022
(51) Int. Cl.: G01D 5/245, G01D 5/20

(54) **TARGET AND RECEIVER FOR AN INDUCTIVE SENSOR**
MASSVERKÖRPERUNG UND EMPFÄNGER FÜR EINEN INDUKTIVEN SENSOR
CIBLE ET RÉCEPTEUR POUR UN CAPTEUR INDUCTIF

(30) Priority: 02.03.2021 EP 21160154
(43) Date of publication of application: 07.09.2022
(73) Proprietor: TE Connectivity Smart Grid GmbH, 44227 Dortmund (DE)
(72) Inventor: PIEPER, Reinhold, 44227 Dortmund (DE); MEISENBERG, Armin, 44227 Dortmund (DE)
(74) Representative: Grünecker Patent- und Rechtsanwälte PartG mbB

(56) References cited:
- DE-A1- 102013 218 768
- US-A- 5 886 519
- US-A1- 2007 194 781
- US-A1- 2018 274 948
- US-A1- 2019 170 494

## Description

The invention relates to a target and a receiver for an inductive angle sensor.

The present description relates to an inductive angle sensor, in particular for arm angle determination in robots, but also in resolver applications for electric motors or generators. Angle sensors, in particular sensors covering a measurement range of 360°, require often that the shape is a narrow ring for mounting in through-shaft arrangements.

An inductive sensor system comprises an exciter coil that couples an oscillating magnetic field in receiver coils. In more detail, as used herein an inductive sensor, which is also referred to as an Eddy current sensor device, is a sensor that uses the principle of Eddy current formation to sense displacement. Eddy currents are formed when a moving or changing magnetic field intersects with a conductor or vice versa. In other words, a conductive encoder element influences a magnetic field in a sensing geometry. As used herein, a conductive element or tooth includes a ferromagnetic element, which will create comparable effects. In the following, a conductive element is also referred to as a conductive pattern and a conductive pattern may be formed by a plurality of conductive wings or conductive teeth.

In more detail, the fast changing magnetic field created by an AC-powered exciter coil causes voltages within at least one receiver coil. Further, when displacing a conductive element of an encoder, the factor of the conductive element covers the Eddy current sensors changes, thereby the sensed value changes. Thus, a position, e.g. an angular position, can be determined.

The arrangement is very simple in design and inexpensive in production, and allows a highly accurate and reliable absolute angle determination.

Recently, there have been considerations about an
gle sensor technology in robot applications and its possible realization with magnetic encoders, e.g. sensors using anisotropic magnetoresistance (AMR). It has to be considered, however, that due to space restrictions, the scales can only have the shape of a narrow ring.

Typically, the sensor has to fit within a narrow ring with a width of below 10mm, preferably below 5mm.

Further, a 360° absolute measurement without reference run may be required. Further, the reproducibility must be very good, but the absolute measurement accuracy is less important.

The reproducibility has to be below 0.1° while the absolute accuracy should be better than 1°.

In order to ensure 360° detection, only single-track coded scales can be considered when using sensors, such as an AMR sensor, since for space reasons two or even three parallel Vernier tracks cannot be accommodated on a narrow scale ring without strong signal crosstalk. However, the effort required to read an absolute, linear magnetic code including an exact interpolation is considerable, which has so far been an obstacle to the further pursuit of the AMR approach.

In the development of a robust inductive sensor, a Vernier-like version of an inductive sensor is known to be used, which includes two secondary coils with different numbers of periods, one above the other. Consequently, such an inductive sensor has two independent receiver geometries. Such an inductive sensor has the advantage over the AMR approach that the encoder neither needs small structures for the scale nor that the sensing elements generate crosstalk.

In more detail, in the case of two or three track Vernier scale of an AMR sensor array, there is always the problem of crosstalk between the individual scales. Solely, the associated scale determines the periodicity of the sensor signals, while the sensor can only passively measure the magnetic field presented. Thus, an AMR sensor always sees the scattered fields from the adjacent scales.

This is fundamentally different in a ring-shaped inductive sensor. Here, the signal period generated by the sensors is determined almost exclusively by the periodicity of the receiver coils. If it is ensured that the induced voltages are measured practically without current, the receiver coils do not perceive the existence of the other coil arrangement. Consequently, in general no crosstalk occurs.

Further, by calculating the phase difference of the two received signals of a plurality of sensor geometries, the angular position can be determined based on the principle of a Vernier scale. An inductive angle sensor having two secondary coils with different numbers of periods allows such a measurement principle.

However, a solution for such an inductive sensor based on the principle of a Vernier scale is limited to an accuracy of approximately 0.2°.

DE102013218768 relates to an inductive position measuring device comprises a scale with a plurality of graduation tracks with inductively scannable markings.

US2019/170494A1 relates to an inductive position-measuring device includes a scanning element and a graduation element, rotatable about an axis relative to the scanning element.

The object of the invention is to provide a solution for an inductive sensor, which enables it to increase the accuracy of an inductive sensor. In particular, an object is a particularly precise detection of angle position in a simple and cost-effective way. Further, it is an object that the inductive sensor is tolerant to geometrical alignment errors. Even more particularly, it is an object to reduce the influence of alignment errors caused by tilting errors, i.e. tilt the sensor or the encoder with respect to a rotation axis, or eccentricity errors, i.e. an axis of rotation of the sensor does not align with an axis of rotation of the encoder.

Further objects of the present invention are to increase the signal amplitude generated by the receiver coils and avoid angular errors caused by an ambiguous phase relation. A further object is to manufacture the inductive sensor simply and economically. Additionally, an object is to provide a sensor solution that is connectable to existing systems. In particular, the solution should reduce assembling efforts, in particular by reducing the number of parts to be assembled, and the manufacturing process to manufacture the structure of the sensing elements. A further object is to provide a simple signal evaluation. A further object is to provide a lightweight sensor.

This object is solved by the independent claims. Advantageous embodiments are solved by the dependent claims.

According to a first aspect, a target for an inductive sensor comprises a plurality of M periodic sections pₛ. Further, within each periodic section p_{s,} a conductive pattern is arranged. Based on this plurality of M conductive patterns a first position information can be obtained.

Further, within each periodic section p_{s,} the width of the conductive pattern in the direction of a measurement range is modulated depending on whether the conductive pattern is in an arrangement within one of N conductive zones or between conductive zones. This modulation allows it to realize a second position information. Thus, by the modulation a width to period ratio, two signals with different periodicity N and M can be obtained.

In more detail, a target for an inductive displacement sensor comprises a plurality of N conductive zones distributed along a measurement range having a dimension Dₜₒₜ in a direction C for providing a general encoder geometry.

Further, the target comprises a plurality of M periodic sections pₛ for providing a fine encoder geometry. Each periodic section pₛ has a dimension of Dₜₒₜ /M in said measurement range and the plurality of periodic sections pₛ overlapping with the measurement range, wherein M and N are positive integer numbers and M is greater equal than 2*N.

Further, each of the periodic sections pₛ is provided with a conductive pattern for providing a fine encoder pattern, wherein within the N conductive zones, the conductive pattern has a first width w1 in the direction C for covering partly the periodic section pₛ, and between the N conductive zones, the conductive pattern has a second width w2 in the direction C for covering partly the periodic section pₛ. The first width w1 is larger than the second width w2. Thus, the target provides a general encoder pattern.

In other words, a target for an inductive displacement sensor is divided in M periodic sections along a measurement range having the dimension Dₜₒₜ in the direction C. In particular, the periodic sections are arranged side by side in the direction C thereby forming together the measurement range having the dimension Dₜₒₜ. In particular, each periodic section is equally dimensioned in the direction C. The plurality of periodic sections pₛ thus provide a geometric pattern for the fine encoder geometry.

For example, if the dimension is a circular dimension, M being a positive integer of for example M=9, and a measurement range is 360°, each periodic section has a dimension of 40°. Alternatively, the dimension may be a linear dimension.

Further, each periodic section comprises a conductive pattern. In other words, within each periodic section, a part of the periodic section is conductive in the direction C. Consequently, the other part of the periodic section is non-conductive. The conductive part and the non-conductive part sum up in the direction C to the dimension of the periodic section. Thus, the fine encoder geometry is provided with conducting means that influence the fine receiver. In particular, the conductive part has a width larger than zero and less than the dimension of the periodic section.

For example, each of the conductive pattern is a wing with a width w in the direction C or each conductive pattern comprises a plurality of teeth having a total width w in the direction C. A plurality of teeth may be used as an encoder geometry for a target to be used with an additional receiver, the additional receiver having a higher resolution than the fine receiver. In other words, by dividing a wing into teeth a further frequency can be modulated.

Further, the target is divided in N conductive zones. In particular, a conductive zone is a zone in which larger Eddy currents can be induced in the target by a time varying magnetic field than in a non-conductive zone of the target. In other words, conductive zones enable larger loop of electrical current than non-conductive zones.

For example, a conductive zone comprises a conductive pattern with a larger width in the direction C than a non-conductive zone. Alternatively, a conductive zone comprises material enabling larger Eddy currents than in a non-conductive zone. In particular, the conductive and non-conductive zones are arranged side by side in the direction C and forming together the measurement range having the dimension D ₜₒₜ. Thus, a general encoder geometry is provided.

For example, if the target is divided in N=4 zones and the measurement range is 360°, the target comprises four conductive zones and between the conductive zones four non-conductive zones. In case that each conductive and non-conductive zone are equally dimensioned, each zone covers a dimension of 45° in the direction C. Alternatively, the conductive and non-conductive zones may be differently dimensioned as will be discussed below.

Further, within the N conductive zones, the conductive pattern has a first width w1. Further, between N conductive zones, the conductive pattern has a second width w2. In particular, the first width w1 is larger than the second width w2. Thus, it is possible that the conductive zone are general encoder pattern, namely using the fine encoder pattern with a larger width in the conductive zones for inducing higher Eddy currents in the conductive zones. In other words, by a modulation of the width to period ratio of the conductive pattern, two separate periods can be realized. In particular, by the modulation it is possible to realize the encoder target within one track, and thus, this arrangement is space saving. Further, by using conductive patterns arranged in M periodic sections and varying width to period ratio in N zones, the measurement resolution can be increased.

Advantageously, the N zones of the target according to the first aspect are defined by an overlay of a first set and a second set. The first set of general periodic zones having a period of Dₜₒₜ/L, including L first general periodic conductive zones of a dimension less than D ₜₒₜ/L in said direction C, regularly distributed along said measurement range. The second set of general periodic zones having a period of D ₜₒₜ/(L+r), including L+r second general periodic conductive zones of a dimension of less than D /(L+r) in said direction C, regularly distributed along said measurement range, where L is an integer grater equal 2 and r is a positive integer and less than L, wherein first and second general conductive zones overlay at least partially.

An overlay of two different periodic structures, in particular a first and second set of general periodic zones, for generating the N zones allows that a Vernier scale can be realized in one single track. Thus, the resolution of the inductive sensor can be increased and at the same time the overall arrangement is small. In particular, the N conductive zones are differently dimensioned, namely based on the two coprime periods L and L+r.

Even more advantageously, the dimension of the L first general conductive zones is less than Dₜₒₜ/2*L in said direction C and the dimension of the L+r second general conductive zones is less than Dₜₒₜ/2*(L+r) in said direction C.

In more detail, when mixing first and second sets of general zones in an overlay, the encoder will cover more than 50% of a corresponding receiver structure. Therefore, the optimum dimension for width for maximum amplitude is less than 50% width to period.

Advantageously, a single zone of the N zones has a dimension in the direction C that is larger than the sum of two times the dimension of zones of the first set of zones and one time the dimension of zones of the second set of zones. In other words, a third encoder element comprises a single tooth-like conducting element extending over a larger angular interval than all the zones generated by overlaying the conductive zone of the first set of zones and the second set of zones.

As will be discussed with reference to the second aspect below in detail, such an arrangement allows compensating for azimuthal variations in the created amplitude of the received signal. In particular, a single zone being larger than three of the other zones allows it to reduce a signal in a particular area of the measurement arrangement, which for example has a high contribution to the signal amplitude, and thus, enables to reduce the influence of alignment errors.

Additionally or alternatively, the number M of periodic sections pₛ is coprime with the number of conductive zones. Such an arrangement allows increasing the resolution by using a third Vernier scale.

Alternatively, the number M of periodic sections pₛ is equal s*N, wherein s is a positive integer greater equal 2. Such an arrangement allows increasing the resolution by providing a fine measurement scale, which provides a high resolution with and between the zones.

Advantageously, the number of M conductive patterns is greater than s*L or s*(L+r), wherein s is a positive integer greater equal 2. Such an arrangement allows increasing the resolution in the embodiment with two sets of general periodic zones.

Even more advantageously, the number of M conductive patterns is equal L*(L+r). Such an arrangement allows increasing the resolution providing a fine measurement scale for each of the first and second set of general periodic zones.

Advantageously, the second width w2 is equal to the dimension of the periodic section pₛ minus the first width w1. Such an arrangement enables that in a receiver geometry optimized for the fine encoder geometry, the signal generation is optimized. In particular, signal generation in the fine encoder geometry is independent from the general encoder geometry.

Advantageously, the first width w1 to period ratio is greater than half the dimension of the periodic section pₛ and less than the dimension of the periodic section pₛ. Even more advantageously, the first width w1 is larger equal than 0.6 times the dimension of the periodic section pₛ. Even more advantageously, the first width w1 is larger or equal than 0.75 times the dimension of the periodic section pₛ.

Additionally or alternatively, the second width w2 is less than half the dimension of the periodic section pₛ and greater than zero. Even more advantageously, the second width w2 is less equal than 0.4 the dimension of the periodic section pₛ Even more advantageously, the second width w2 is less or equal than 0.25 the dimension of the periodic section pₛ.

Additionally or alternatively, the target for an inductive displacement further comprises a conducting wire, wherein within one conductive zone, the conducting wire short circuits the conductive patterns arranged in this conductive zone in the direction C. Thus, even larger Eddy currents can be induced in the conductive zone, e.g. by enabling a closed loop between the pluralities of tooth forming the conductive pattern. In particular, a copper wire can be used to induce particularly large Eddy currents. A conducting wire is in particular a conductive structure for connecting abutting connection pattern in the form of a wire.

Additionally or alternatively, the target further comprises a conducting support structure, wherein the M conductive patterns are conductively connected to the support structure. Thus, even larger Eddy currents can be induced in the conductive zone. In particular, the support structure and the conductive pattern can be fabricated together, which increases the stability of the target.

A corresponding receiver, according to the first aspect, for a target according to the first aspect, comprises a general position receiver geometry, the general position receiver geometry comprising a plurality of general receiver coils, each of the general receiver coils forms a plurality of L periodically repeating general receiver elements distributed along a measurement range having a dimension D ₜₒₜ in a direction C. Further, the receiver comprises a fine position receiver geometry, the fine position receiver geometry comprising a plurality of fine receiver coils, each of the fine receiver coils forms a plurality of M periodically repeating fine receiver elements distributed along the measurement range, wherein L is an integer greater equal 2 and M is greater equal than 2*L, and the general position receiver geometry and the fine position receiver geometry are at least partly overlaying.

In other words, the receiver for an inductive displacement sensor comprises a fine position receiver geometry divided in M periodically repeating fine receiver elements arranged along a measurement range having a dimension Dₜₒₜ in a direction C. In particular, the fine receiver elements are arranged side by side in the direction C and forming together the measurement range having the dimension Dₜₒₜ. In particular, each fine receiver element is equally dimensioned in the direction C. The plurality of fine receiver elements thus provide the receiver geometry optimized for detecting the position of the fine encoder geometry of the above discussed target. In particular, within a receiver element each receiver coil forms two abutting loops as will be discussed below with regard to the second aspect.

Further, the receiver for an inductive displacement sensor comprises a general position receiver geometry divided in L periodically repeating general receiver elements arranged along a measurement range having a dimension Dₜₒₜ in a direction C. In particular, the general receiver elements are arranged side by side in the direction C and forming together the measurement range having the dimension Dₜₒₜ. In particular, each general receiver element is equally dimensioned in the direction C. The plurality of general receiver elements thus provide the receiver geometry optimized for detecting the position of the general encoder geometry of the above discussed target.

Further, the general position receiver geometry and the fine position receiver geometry are at least partly overlaying, advantageously completely overlaying. Thus, a particularly small receiver can be realized enabling a high resolution, in particular by being sensitive to two frequencies provided by a target such as discussed above.

Advantageously, the receiver further comprises a second general position receiver geometry comprising a second plurality of second general receiver coils. Each of the second general receiver coils forms a plurality of L+r periodically repeating second general receiver elements distributed along the measurement range in the direction C, wherein r is a positive integer and less than L, and wherein the first and second general receiver geometry are at least partly overlaying.

Additionally or alternatively, the receiver further comprises a second fine position receiver geometry. The second fine position receiver geometry comprising a plurality of second fine receiver coils, each of the second fine receiver coils forms a plurality of K periodically repeating fine receiver elements distributed along the measurement range, wherein K is an integer and greater equal than 2*M, and wherein first and second fine receiver geometry are at least partly overlaying.

Thus, the resolution can be increased by using a third and/or fourth frequency. Notably, even higher frequencies can be determined by providing receivers with even higher periodic structures.

An inductive displacement sensor according to the first aspect comprises an oscillator circuit that generates a periodic AC signal and couples the AC signal into an exciter coil; a receiver according to the first aspect; a target according to the first aspect; and an evaluation circuit for the evaluation of signals induced in the receiver.

According to a second aspect, an inductive angle sensor comprises in addition to two receiver geometries and two encoder elements, a third encoder element. As discussed above, two receiver geometries allow improving the resolution by use of a Vernier scale. The third encoder element, which has been discussed in the first aspect as a single zone, is designed as a conducting or ferromagnetic extension with an asymmetric geometry, the asymmetric geometry influencing the strength of the inductive coupling between the exciter coil and each of the receiver coils only in a part of the periodically repeating loop structures of the receiver coils. In other words, the conducting extension of the third encoder element disturbs the signal only in a part of the plurality of periodically repeating loops of the receiver coils. This third encoder element minimizes the variations in the azimuthal dependent amplitude of the signal strength, and thus, reduces the influence of alignment errors.

In more detail, the inductive angle sensor according to the first and second aspects comprise an oscillator circuit, which generates a periodic AC signal and couples into an exciter coil and a receiver. The receiver for the inductive sensor comprises a receiver geometry, the receiver geometry comprising several receiver coils, each of which forms a plurality of periodically repeating receiver elements, in particular the receiver coils are a periodically repeating loop structure, and the arrangement of which respectively forms a receiver geometry. In particular, a plurality of L periodically repeating receiver elements are distributed along a measurement range having a dimension Dₜₒₜ in the direction C and a plurality of L+r periodically repeating second receiver elements are distributed along the measurement range in the direction C, wherein L is an integer greater equal 2 and 3 is r is a positive integer and less than L. In particular, first and second receiver geometries are at least partly overlaying. Further, the inductive angle sensor comprises an evaluation circuit for the evaluation of the signals induced in the receiver coils, and moving, inductive coupling elements, which influence the strength of the inductive coupling between the exciter coil and the receiver coils.

The fast changing magnetic field created by the AC-powered exciter coil causes voltages within the receiver coils. Further, when moving the inductive coupling element, the factor of the inductive coupling element that covers the receiver coils changes, thereby the sensed value changes. Thus, an angular position of the encoder is determined.

Further, the coupling element interacts with the at least two receiver geometries, whereby the periodicity of the loop structures of the receiver coils in the two receiver geometries is different. Such a configuration allows receiving at least two independent signals. Further, such a configuration allows that each amplitude signal is periodic and the periods of the two signals are different. Thus, based on the two signals, a phase difference can be determined. This phase difference corresponds to one angular position of the coupling element, which can be measured with a higher precision. In other words, the inductive sensor can apply the principle of a Vernier scale.

As used herein, a receiver coil (which is also referred to as sense coil) is an electromagnetic coil, i.e. an electrical conductor such as a wire that is shaped. In other words, a receiver coil is a conductor with a plurality of loops. As used herein, a loop is a turn of the conductor or a winding of the receiver coil.

Further, each receiver coil is formed by a plurality of loops, wherein the loops of each receiver coil can be arranged side by side in a sensing plane for covering a measurement range. Arranging turns side by side allows to easily form a planar coil.

Further, the turns can be electrically connected. Such a configuration allows that each receiver coil need only two contacts. In more detail, such a configuration enables that in each turn a voltage is induced, namely in response to the periodic AC signal. In more detail, the sum of the voltages is the induced signal. Such a planar coil can be particularly easily fabricated, for example as a PCB. Further, such a planar coil can be made of a flexible material, and thus, can be easily connected to a device, e.g. can be bended so as to follow a cylinder surface.

In case of a planar coil, at the crossing of the wires of two abutting turns, the conductor can be arranged on two levels. The levels can, for example, be separated by insulating layers, or the conductors can be arranged on a front and a backside of a PCB.

Advantageously, abutting loops of a receiver coil are wound in opposite directions. Such a configuration enables that the net voltage of each receiver coils is zero. Consequently, the measuring range can be increased.

Even more advantageously, a pair of coils forms each receiver coil. Such a configuration enables increasing the measuring accuracy by using an arc tan algorithm.

Further, the angle sensor has in addition to the two receiver geometries two encoder elements, and whereby the first encoder element and second encoder element are each designed as conducting teeth with periodic geometry. Further, a periodicity of the first encoder element is different from a periodicity of the second encoder element, and the periodicity of the loop structure of one of the receiver coils each correlates with the periodicity of the geometry of one of the first and second encoder elements each.

In other words, a plurality of N conducting elements is defined along a measurement range having a dimension Dₜₒₜ in a direction C, the conducting elements being defined by an overlay of first set of periodic elements that has a period of Dₜₒₜ /L, including L first periodic elements of a dimension less or equal than D tot/(L*2) in said direction C, regularly distributed along said measurement range and a second set of periodic elements having a period of D ₜₒₜ /(L +r), including L+r second periodic elements of a dimension of less than D /(L+r) in said direction C, regularly distributed along said measurement range, where L is an integer grater equal 2 and r is a positive integer and less than L, wherein first and second general conductive zones overlay at least partially.

In other words, the periodicity of the loop structure of the first receiver coil along the direction C corresponds to the periodicity of the geometry of the first encoder element and the periodicity of the loop structure of the second receiver coil along the direction C corresponds to the periodicity of the geometry of the second encoder element.

An encoder with periodic geometry increases the overall signal amplitude. In particular, the first encoder element comprises a plurality of teeth. In more detail, the periodicity of the teeth of the first encoder element correlates with the periodicity of the repeating loop structure of the first receiver coil. Such a configuration allows that a plurality of identical signals is induced, each of the identical signal is induced in one period of the first receiver coils. Thus, the signal amplitude of the first receiver coil is increased. Similarly, the second receiver geometry correlates to the second encoder element.

Advantageously, for maximizing the signal amplitude, the number of the plurality of the teeth of the first encoder element correlates with the quantity of the period of the repeating loop structure of the first receiver coil. Similarly, the number of the plurality of the teeth of the second encoder element correlates with the quantity of the period of the repeating loop structure of the second receiver coil. For example, the number of teeth can be equal to the quantity of the repeating loop structures.

Within this application a conducting teeth is an element extending forming the coupling element. For example, assuming a polar or a cylindrical coordinate system and the origin being the axis of rotation, a tooth extends in radial dimension and being delimited in azimuthal dimension. In more detail, assuming a flat coupling element, i.e. polar coordinates, the teeth may be formed by blades or wings. Alternatively, assuming a cylindrical element, i.e. cylindrical coordinates, the coupling element with the teeth may be described, for example, by a gear.

Further, providing a plurality of teeth reduces alignment errors. In particular, having teeth being azimuthal equally distributed, i.e. having the periodicity of the loop structure of the receiver reduces errors such as an eccentric arrangement of the encoder or the sensor relative to the axis of rotation.

Further, a third encoder element is provided. The third element is designed as conducting an extension with an asymmetric geometry, the asymmetric geometry influencing the strength of the inductive coupling between the exciter coil and the receiver coils in only a part of the loop structures of the receiver coils. In other words, the periodicity of the loop structure of one of the receiver coils each does not correlate with the asymmetric geometry of on the third encoder elements. In other words, one single element of the N elements has a dimension in the direction C that is larger than the sum of two times the dimension of elements of the first set of elements and one time the dimension of elements of the second set of elements. In other words, the third encoder element comprises a single tooth-like conducting element extending over a larger angular interval than all the teeth generated by overlaying the conductive sections of the first encoder element and the second encoder element.

As used herein, the conductive teeth and the conducting extensions are fabricated such that each teeth or extension influences a magnetic field in the receiver coils. For example, the conducing teeth or extensions being a blade of a conducting element.

In more detail, as discussed above two different encoder geometries are provided for the two receiver coils. Each of the encoders induces a signal in a plurality of repeating loop structures of both receivers. In other words, signals of the first encoder and the second encoder are superimposed thereby forming a sum signal in both receiver coils. This sum signal, however, has an angular dependency. This angular dependency influences the amplitude of the signals received by the evaluation circuit. Consequently, the amplitude of the determined signals has an angular dependency.

In a perfect aligned system, such amplitude variation has no influence to the result of the angle measurement. However, in case of alignment errors, caused for example during assembling the sensor or due to heat effects in the system, tilt errors or eccentricity errors occur. In such a case of a real system, a combination of a first and second encoder element will lead to different signal generation strength depending on the position on the wheel. In combination with alignment errors the amplitude variation deteriorates the accuracy of the measurement. For example, if a segment of the combined first and second encoder generates a signal with a high amplitude, an alignment error may severely deteriorate the angular measurement of the whole sensor, due to the fact that this one encoder segment dominates the sum signal. The third encoder element now allows to compensate for azimuthal variations in the created amplitude of the received signal. By reducing the contribution of the signal of said first and second encoder combination, which for example has a high contribution to the signal amplitude, enables to reduce the influence of alignment errors.

As used herein, asymmetry is the violation of the symmetry provided by the periodicity of the first encoder element and the second encoder element when combing them to one encoder structure in connection with the periodically repeating loop structure. Such a configuration allows that amplitude variations, which are caused by the sum signal of the encoder, are minimized.

In particular, the third encoder element covers only a part of the strongest signal creating parts of the encoder in order to get a more regular distributed signal generation in the periodically repeating loop structures of the receiver coils. Consequently, the signal amplitude provided by the corresponding period of the loop structure is reduced. Therefore, the contribution of the individual loop structure of the periodically repeating loop structures is made equal, and thus, the influence of alignment errors is reduced.

Advantageously, the three encoder elements are mechanically linked to one another. Such a configuration allows a compact and easily manufactured encoder element. Further, such a configuration allows reduction of the alignment requirements for the individual encoder elements.

Even more advantageously, the conducting extension connects two adjacent conducting teeth of one of the first or second encoder element. By such a configuration, one entire loop structure of the plurality of loop structures of the receiver coils can be neutralized. This allows a simple to fabricate encoder geometry, i.e. avoiding tiny structures in the encoder wheel, which may be difficult to fabricate.

Advantageously, the ratio of a width of teeth of the periodic geometry to a period length of the periodic structure is less than 0.5. Such a configuration allows maximizing the signal amplitude for both receiver coils.

In more detail, it is disadvantageous using an encoder, which creates a maximum amplitude in one of the receivers, because the second receiver coil will receive less signals. When the regular encoder has the teeth width of 50% of a period, they will create the maximum amplitude. But, when mixing such encoders in an OR-combination, the encoder will cover more than 50% of the receiver coils. Therefore, the optimum teeth width for maximum amplitude is less than 50% width to period.

Advantageously, the coupling elements rotate around an axis of rotation, wherein the coupling elements and a receiver section comprising the receiver coils are arranged on opposing discs. In other words, the coupling elements and the receiver section are arranged on planes extending perpendicular to the axis of rotation. Such a configuration allows a particular space saving arrangement. In the following, receiver section is sometimes as receiver.

Alternatively, the coupling elements rotate around an axis of rotation, wherein the coupling elements and a receiver section comprising the receiver coils are arranged on opposing lateral surfaces with respect to the axis of rotation. In other words, the coupling elements and the receiver section are planes laterally arranged to the axis of rotation. Such a configuration improves the connectivity of the sensor arrangement to an application, e.g. a robot arm.

Advantageously, the quantities of periodic repetitions in the loop structures of the receiver coils of the two receiver geometries are in a co-prime ratio to one another over the complete measuring range of the angle sensor. Such a configuration allows a particularly high precision. In other words, in the case of a measurement range of 360° the quantities of periodic repetitions in the loop structures of the receiver coils of the two receiver geometries are co-prime.

The exciter coil and the receiver coils lie in a plane. Advantageously the exciter coil and at least one of the receiver coils comprises a conductive path on a printed circuit board (PCB). Such a configuration is easy-to-manufacture and to design the sensor compact. Preferably, the coils lie in the same plane. Such a plane has to be understood as a substantially flat object where one dimension is much smaller than the other two dimensions. Parts of the sensor can for example, be located on a front side of a PCB and other parts can be located on a backside of the PCB. This means that the sensor would still lie substantially in a plane, i.e. the sensing plane.

In an easy-to-manufacture embodiment, a first receiver coil is formed in a first layer, e.g. a first PCB, and the second receiver is coil are formed in a second layer, i.e a second PCB. Such a multilayer arrangement can be easily stacked.

The exciter coil surrounds the receiver coils.

Advantageously, the sensor further comprises a microcontroller. The microcontroller comprises on output for powering the exciter coil and the microcontroller comprises a plurality of inputs, e.g. four inputs, each input being connected directly or indirectly via a preamplifier with one coil. As used herein, a direct connection is a connection transmitting the output signal of the receiver coils without evaluating or manipulating the comprised information, i.e. the high frequency signal induced from the exciter in the receiver coils. Such a configuration reduces the parts number, in particular an application-specific integrated circuit (ASIC) for generating one signal out of the pair of signals of a pair of sense coils of one of the receiver coils. In particular, recent developments in microcontroller technology enables detecting the MHz oscillating fields induced in the receiver coils and directly evaluate them without further using analog technology such as an ASIC to determine the angular position.

Advantageously, the angle sensor further comprises a storage unit for storing a calibration phase difference. In particular, a look-up table mapping between an angle position and the calibration phase difference is stored. Such a configuration allows to increase the alignment tolerances, e.g. by avoiding errors caused in wrongly determined rough position, which is obtained from the phase difference of the signals and is finally needed for the absolute determination of the position. The fine position is then determined as an average value via the angle evaluation of the periodic signals.

In more detail, a rough error can very quickly lead to a period jump with extremely high measuring errors. In other words, only for one receiver coil the correct loop structure is identified. This rough position error is related to the tilt between sensor, e.g. sensor PCB, and the rotary axis. Such a tilt leads to a fluctuating air gap between sensor and the encoder wheel. A fluctuating air gap in turn causes a very different sensitivity on different sides of the sensor. In more detail, although sensor signals are generated on both sides of the wheel (bottom and top less strong), the tooth positions left and right do not fit well to the signal phase of the sum signal. A difference in sensitivity between left and right will therefore lead to considerable signal phase deviations in the sum signal. This is compensated by storing a look-up table mapping between an angle position and the phase difference.

Advantageously, the receiver coils lie in a plane and are overlapping in one receiver section or in a plurality of receiver sections In other words, the receiver coils lie in a plane and are at least partly overlapping. For example, one receiver section consists of the receiver coils that are advantageously overlapping. Alternatively, a plurality of receiver section is provided, each comprising a part of the receiver coils that are advantageously overlapping. Such a configuration allows a particularly space saving arrangement.

Additionally, a method for determining an angle position is described. The method comprising the steps of:
providing an inductive angle sensor in line with any above described inductive angle sensor;
receiving, by the receiver coils of first periodicity, a set of first signals,
receiving, by the receiver coils of a second periodicity, a set of second signals, and
calculating, by the evaluation circuit, the phase difference between the signals from first and second periodicity for determining the angle position.

Advantageously, the method further comprising the steps of:
generating, by an generation unit, a look-up-table, the look-up-table defining a relation between a calibration phase difference and an angular position; and
storing, in a storage unit, at least the calibration phase difference.

The calibration, i.e. generating or measuring and saving or storing of the relation between phase difference and the angular position, can be done easy, even at the first switch-on of the sensor. In case of the first activation, the phase difference at the starting position is defined as 0°-value. From this moment on the exact actual position can be calculated from the two signals, in the following referred to as the n- and m-signal angle (fine position). When the position moves from one receiver coil period to the other, the actual period can be counted up or down. Therefore, it is possible to detect the position over the whole range with high fine position accuracy as an absolute value in the 360°-range. Therefore, one single movement over the whole measurement range enables the microcontroller to build up a look up table with the absolute phase differences depending on the position. When the sensor is switched on the next time, i.e. after a calibration, the absolute position can be find using this look up table without the danger of a large error jump over one whole period.

Even more advantageously, the method further comprising the step of
comparing, by the evaluation unit, the calculated phase difference with a stored calibration phase difference for determining the angle position.

Such a configuration enables to identify a rough position error, determine a rough position, and compensate for such rough errors. In response to the comparing, the method may include, for example, calculating the correct value or outputting a warning that the calibration needs to be updated,

Even more advantageously, the method further comprising the step of
updating, by an updating unit (42), the calibration phase difference permanently or when the calculated phase difference deviates from the stored calibration phase difference more than a predetermined threshold value.

It is possible to generate the look up table not only during an initial calibration run, but also in later measuring operations, either permanently or automatically when major differences between coarse and fine position calculations occur. Such a configuration enables compensation for changes in the mechanical assembly due to temperature, wear, drift or mechanical load during sensor life.

The inductive angle sensor will now be described in greater detail and in an exemplary manner using advantageous modifications and with reference to the drawings. The described modifications are only possible configurations in which, however, the individual features as described above can be provided independently of one another or can be omitted.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. The scope of the present invention is defined by independent claims 1 and 12. The dependent claims refer to particular embodiments.

Further features and advantages will become apparent from the following, more particular description, of the various embodiments of the invention, as illustrated in the accompanying drawings in which like references refer to like elements, and wherein:
In the figures,
- **FIG. 1**: is a schematic of an inductive angle sensor;
- **FIG. 2**: is a schematic view of receiver coils and an encoder;
- **FIG. 3**: is a schematic view of the encoder geometry of Fig. 2;
- **FIG. 4**: is a detailed view of the receiver coils of Fig. 2;
- **FIG. 5**: is a schematic view of a first receiver coil of Fig. 2;
- **FIG. 6**: is a schematic view of a second receiver coil of Fig. 2;
- **FIG. 7**: is a schematic view of an exciter coil;
- **FIG. 8**: is a schematic side view of the receiver coils and an improved encoder;
- **FIG. 9**: is a schematic view the improved encoder geometry of Fig. 8;
- **FIG. 10**: is a schematic view a first encoder geometry;
- **FIG. 11**: is a schematic view a second encoder geometry;
- **FIG. 12**: is an alternative arrangement to the arrangement shown in Fig. 8;
- **FIG. 13**: is a perspective view of Fig. 12;
- **FIG. 14**: is a variation of the sensor of Fig. 12 and Fig. 13
- **FIG. 15**: is a target according to the first aspect; and
- **FIG. 16**: is a modified target according to the first aspect.

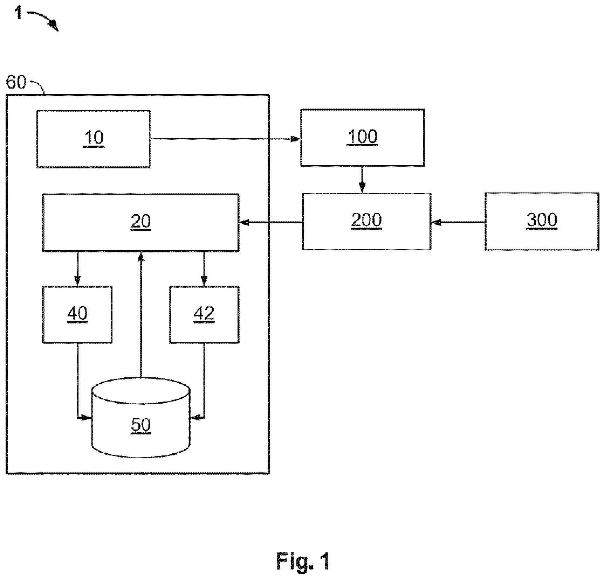

The present invention will now be explained in more detail with reference to the Figures. Firstly, with reference to Fig. 1 the components of an inductive angle sensor 1 will be explained. The inductive angle sensor 1 comprises an oscillator circuit 10, an exciter coil 100, a receiver section 200, which comprises a plurality of receiver coils, an evaluation circuit 20, and a coupling element 300.

The oscillator circuit 10 generates a periodic AC signal. This signal is fed into an exciter coil 100. The receiver section 200 receives this time varying signal. The coupling element 300, which is also referred to as an encoder, manipulates the time varying filed, and thus, a position of the coupling element can be determined.

In more detail, in the coupling element, 300 Eddy currents are induced that cause a compensation of the external alternating field generated by the exciter coil 100. Further, the Eddy currents reduce the magnetic flux through parts of the receiver section 200. Ferromagnetic materials concentrate the field and have an inverse effect on the flux in the coil of the receiver. Therefore, both types of materials are detectable by inductive sensors.

The evaluation circuit 20 evaluates the signals induced in the receiver section 200. For example, the evaluation unit measures the voltage induced in coils of the receiver. Based on the measured voltage value a corresponding angular position of an encoder can be determined.

Further, a controller 60 can be used for controlling the oscillator circuit 10 and the controller can directly receive the varying voltages induced in the receiver section 200. The measured values can then be processed directly in the evaluation circuit of the controller. The controller is arranged, for example, on a carrier with the exciter coil 100 and/or the receiver 200. Such a configuration allows to reduce the number of parts, e.g. using an additional ASIC.

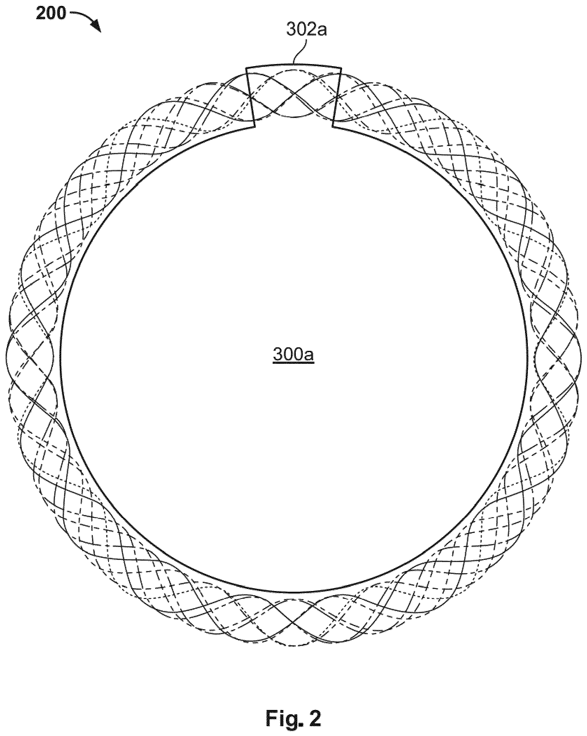

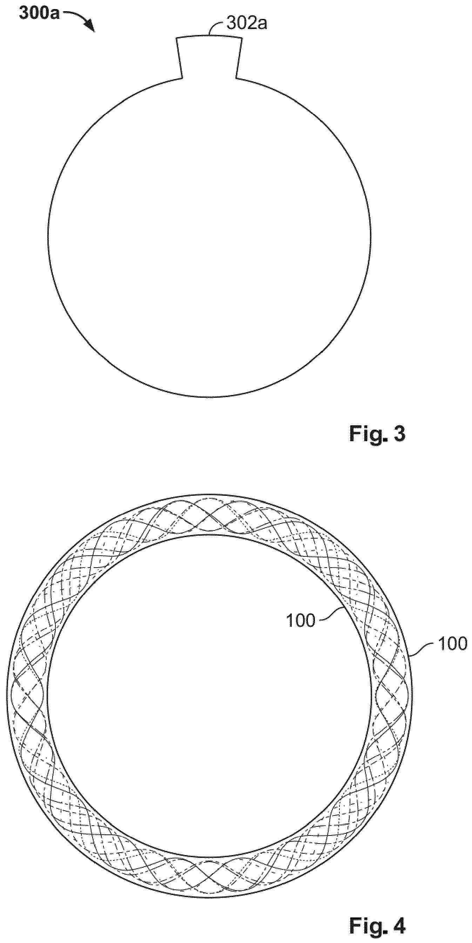

Further, Fig. 2 shows an example of a receiver section 200 and a coupling element 300a. The coupling element 300a is discussed with reference to Fig. 3. The coupling element 300a has only one tooth 302a. This tooth makes the encoder operable as to determine an angular positon.

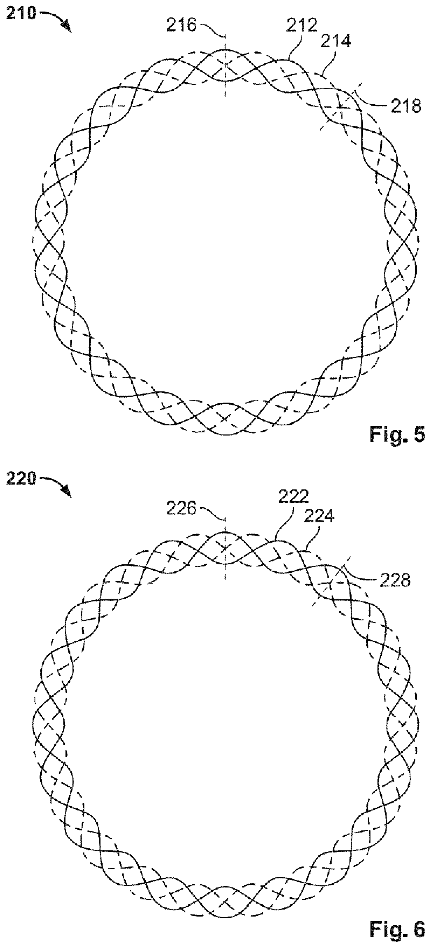

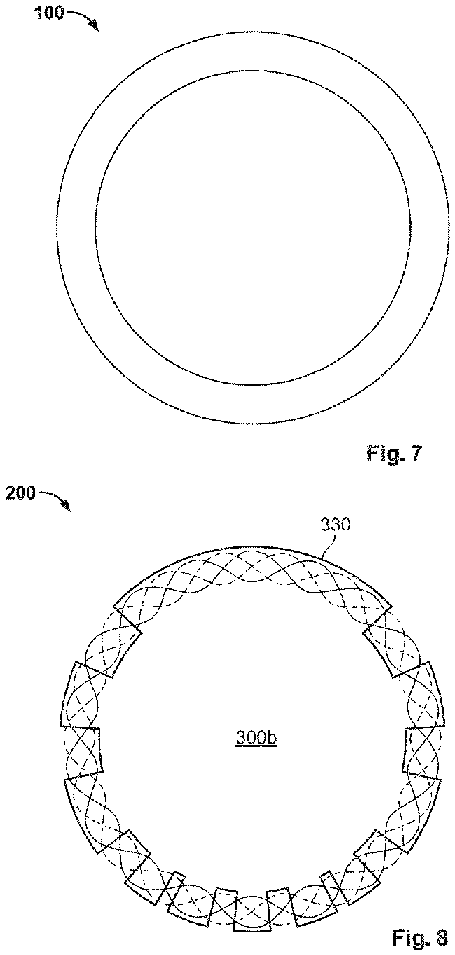

The receiver of Fig. 2 is also shown in Fig. 4. In addition, Fig. 4 shows an exciter coil 100. The receiver of Fig. 4 comprises a first receiver geometry 210, which discussed with reference to Fig. 5, and a second receiver geometry 220, which is discussed with reference to Fig. 6. The exciter coil 100 is discussed with reference to Fig. 7.

Reference to Figs. 5 and 6 describe each of the first receiver geometry 210 and second receiver geometry 220 as being formed by a periodically repeating loop structure. For example, as shown in Figs. 5 and 6, each of the receiver geometries 210 and 220 is formed by a pair coils 212 and 214 or 222 and 224, respectively. Each pair of coils has a loop structure, thereby forming a receiver geometry with a certain period. The dotted auxiliary lines 216 and 218 delimiting the fundamental period of receiver geometry 210. The dotted auxiliary lines 226 and 228 delimiting the fundamental period of receiver geometry 220. In the present example, the first receiver geometry 210 is repeated m=9 times, and the second receiver geometry 220 is repeated n=10 in the measurement range of 2 pi. In particular, the different quantities of periodic repetitions are co-prime. Such a configuration allows using the principle of a Vernier scale.

Further, as shown in Figs. 5 and 6, each receiver geometry 210, 220 can be formed by a pair of loop structures, also referred to as pair of coils 212 and 214 or 222 and 224. Each coil 212, 214, 222, and 224 delimits a plurality of areas. The areas of a pair of coils 212 and 214 or areas of a pair of coils 222 and 224 are congruent when shifted by a quarter of the respective period. Such a configuration allows to receive from each receiver geometry 210, 220 a pair of signals, e.g. one cosine like signal and one sinus like signal, because the areas delimited by the coils are congruent when shifted. Such a configuration allows to use an arc tan signal processing, and thus, increasing the resolution.

According to a not shown embodiment, each of the receiver coils may be formed by only one coil. Further, additional receiver coils may be provided.

Further, as shown in Fig. 7 the exciter coil 100 can be formed by two concentric loops. As shown in Fig. 4, the encoder coil 100 can surround the first and second receiver coil 210 and 220. Such a configuration allows a compact sensor arrangement. However, other configurations of the encoder coil are also possible.

Referring back to Fig. 2, the operation of the inductive sensor is described. In particular, the single tooth, also referred to as blade, influences the coupling in one loop structure of the periodically repeating loop structure. A maximum signal amplitude is achieved with such a single tooth at a tooth width of half a signal period, i.e. the width of one period. In the example of Fig. 2, this would be an 18° or 20° width for the secondary coils having quantities of periodic repetitions of 10 or 9, respectively. In order to get comparably good signals with both secondary receiver geometries 210 and 220, an averaged width of 19° is chosen in the example.

This solution, however, has two serious weak points. On the one hand, the tooth always generates a maximum signal in only one single sub coil of each track, i.e. in one loop structure of the periodic structure. Thus, the attainable total signal amplitude is a small fraction of the theoretically possible amplitude. The second problem are the strong periodic measurement errors in an eccentric sensor arrangement. The reason for this is that only a single position on the encoder wheel contributes to the signal generation at all. With several teeth - distributed around the circumference - significantly reduced measurement errors due to eccentricities are achievable.

Such a configuration is shown in Fig. 8, which shows an example of a receiver section 200 and a coupling element 300b. The receiver section 200 is identical with the receiver discussed in Figs. 2 and 4 to 6, and a description thereof is omitted. For a matter of presentation only, Fig. 8 does not show a second receiver geometry and an exciter coil. The description of the exciter coil is referred to the above description of Figs. 4 and 7.

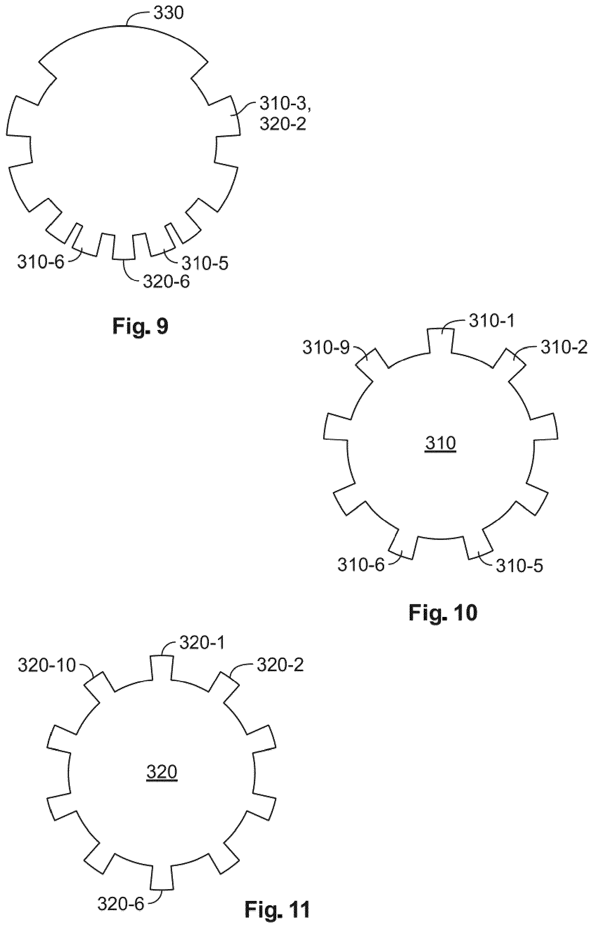

The coupling element 300b is discussed with reference to Fig. 9. The coupling element 300b has a plurality of teeth and thus can be used to determine an angular position. The coupling element of Fig. 9 comprises a first encoder element 310, which is discussed with reference to Fig. 10, a second encoder element 320, which is discussed with reference to Fig.11, and a third encoder element 330.

The encoder elements 310 and 320, and the respective periodic geometries are described with reference to Figs. 10 and 11. Each of the first encoder 310 and second encoder 320 is formed by a periodically repeating teeth structure 310-1, 310-2, ..., 310-9 and 320-1, 320-2, ..., 320-10, respectively. For example, as shown in Figs. 10 and 11, each of the encoder element 310 and 320 is formed by teeth with periodic geometry, thereby forming an encoder geometry with a certain period. The quantity of the periodic repetition of the first encoder geometry 310 is for example m=9 and corresponds to the quantity of the periodic repetition of the first receiver geometry. Similar, the quantity of the periodic repetition of the second encoder geometry 320 is for example n=10 and corresponds to the quantity of the periodic repetition of the second receiver geometry. In particular, the quantity of the periodic repetition of the encoder increases the signal amplitude compared to the configuration shown in Fig. 2. In other words, the lack of signal amplitude discussed with reference to Fig. 2 can be avoided by the use of n, resp. m teeth distributed around the encoder wheel with the same quantity of periodic repetition as employed by the receiver geometry.

Using only one of the encoder wheels, e.g. only the first encoder geometry 310 the geometry causes the problem that with such a design a maximum signal amplitude at the coil with the same quantity of periodic repetition, i.e. in the first receiver coil, is generated. At the other hand, the other coil will create no signal. It is not possible to use an encoder wheel, which creates a high amplitude in one of the first receiver geometry, but no signal in the receiver geometry with the other period.

Therefore, the combined wheel shown in Fig. 9, comprises an OR-combination of both encoder wheels shown in Figs. 10 and 11. Such a combined encoder wheel reduces error components caused for example by an eccentricity. Consequently, such a combined wheel is advantageous in view of alignment requirements compared to the single tooth wheel shown in Fig. 2. In particular, alignment errors have less impact to the measuring accuracy.

In view of this OR-combination, the signal amplitudes of both signals is advantageously optimized. When the regular encoder wheels have the teeth width of 50% of a period, as discussed above with reference to Fig. 2, both teeth create the maximum amplitude. But when mixing such wheels in an OR-combination, as shown in Fig. 9, the encoder wheel will cover much more than 50% of the total teeth content. For example, the teeth 310-3 and 320-2 cover more than the optimal 50%, because both are partly overlapping. Therefore, less than 50% teeth width to period optimizes the maximum amplitude of both signals. For example, in the configuration show in Fig. 8, in order to maximize the signal amplitude the optimum teeth width to period length relation is approximately 0.35.

Further, it is advantageous that both receiver coils create a comparable signal amplitude. Such a configuration enables that the measured signals are being successfully evaluated. Further, small gaps, which are difficult to produce should preferably be avoided. For example, in the configuration show in Fig. 8, in order to avoid small gaps and having a similar signal strength, the optimum teeth width to period length relation is approximately 0.32.

Considering for this configuration the impact of alignment errors, it has been realized that even in view of an encoder element comprising both receiver geometries, alignment errors have a significant impact to the resolution. It has been identified that this is caused by an azimuthal dependency of the teeth density. For example, assuming a not shown overlap figure composed of Figs 10 and 11, the top position, i.e. at the position of the teeth 310-1 and 320-1, the teeth distribution is the same as on each of the simple, period-specific wheels shown in Figs. 10 and 11. Therefore, in this area nearly the full signal is created at both periods. At the bottom position, i.e. the position of teeth 310-5, 310-6 and 320-6, the combined wheel has teeth of the first period in the gaps between the second period teeth and vice versa. Therefore, in the bottom area, the created signals are compensating each other.

To compensate for this difference, the modified encoder shown in Fig. 9, comprises a third encoder element 330. For example, in the present example, the third encoder element 330 connects the teeth 310-1/320-1 and the adjacent teeth 320-1 and 320-10. In other words, both edges of the teeth 310-1/320-1 are removed and one edge of the adjacent teeth 320-1 and 320-10 is removed in order to align the signal generation portion in the upper part with that in the lower part.

As being shown in Fig. 9, the third encoder element 330 is designed as conducting an extension with an asymmetric geometry with respect to the periodic, i.e. symmetric, geometry of the receiver coils. The asymmetric geometry influences the strength of the inductive coupling between the exciter coil and each of the receiver coils only in a part of the periodically repeating loop structures of the receiver coils that covers the full measurement range. In other words, the quantity of the periodic repetition of the third encoder element 330 is 1 and does not correspond to the quantity of the periodic repetition of the first or second receiver geometry. Such a configuration allows that a part of the periodically repeating loop structures of the receiver coils is not contributing to the analyzed signal.

In more detail, and as best shown in Fig. 8, the conducting extension 330 can only be provided in a top region, i.e. has an asymmetric geometry. In other words, only a part of the periodically repeating loops are influenced by the conducting extension, due to the asymmetric geometry. Consequently, the net voltage induced in said one loop does not enable an angular position determination. In other words, the conducting element influences the signal amplitude in a part of the periodically repeating loop structure of the receiver coils without influencing the absolute position determination, which is possible by the other parts not influenced by the asymmetric geometry of the conductive extension. Therefore, even if the conducting extension deteriorates the signal amplitude, the tolerances for the alignment of the remaining parts can be increased. In other words, the accuracy of the modified combined encoder wheel, i.e. coupling element 300b, is high under all disturbing conditions, i.e. alignment conditions.

Additionally, it has been recognized that a further error in the determination of the rough position occurs. The rough position is obtained from the phase difference of the two signals of the receiver geometries and is needed for the absolute determination of the position. The fine position is then determined as an average value via the angle evaluation of the periodic signals. Such a coarse error can lead to a period jump with extremely high measuring error.

Further, this rough position error can be related to the tilt, e.g. between a sensor PCB and the rotary axis. Such a tilt leads to a fluctuating air gap between sensor PCB and the wheel. A fluctuating air gap in turn causes a very different sensitivity on different sides of the sensor.

Fig. 8 shows that the sensor signals are generated on both sides of the wheel, i.e. left and right side, while the bottom and top sides do contribute less to the signal. Therefore, in case of tilt errors, the teeth positions left and right do not fit well to the signal phase of the sum signal. A difference in sensitivity between left and right will therefore lead to considerable signal phase deviations in the sum signal.

In view of this further impact of an alignment error, a storage unit 50, as shown in Fig. 1, is advantageous. It has been recognized that the deviations, which easily can lead to large error jumps are - without changes in the mechanics - stable and their inverse function always leads to an unambiguous position. When the shape of the phase difference - angular position curve is stored in a look-up-table (LUT) a proper, reliable and accurate operation of the sensor is ensured. Therefore, such a storage unit allows saving calibration values that may be used to further increase alignment tolerances. A calibration run may be performed at the manufacturer or the user end.

As discussed with reference to Figs. 2 to 11, the coupling elements 300a, 300b rotate around an axis of rotation. The coupling elements are disc shaped. The receiver coils are also arranged on discs. Both discs are opposing to each other. Such a configuration is particularly space saving.

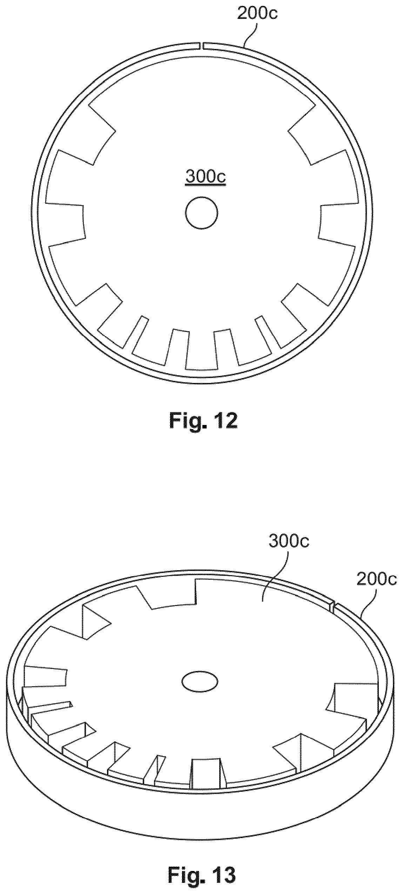

Figs 12 and 13 show an alternative geometric arrangement of a receiver section 200c and a coupling element 300c. The receiver section 200c forms a lateral surface with regard to the axis of rotation. The coupling element 300c has a gear like shape. Such a configuration enables an easy connection of the receiver section and coupling element to a device. Such a solution allows that devices can be easily retrofitted.

Advantageously, the receiver 200c is formed by a flexible circuit board, e.g. a printed circuit board. Such a configuration allows an easy fabrication of the receiver section and allows to arrange the receiver section in following the lateral surface by deforming the flexible circuit board.

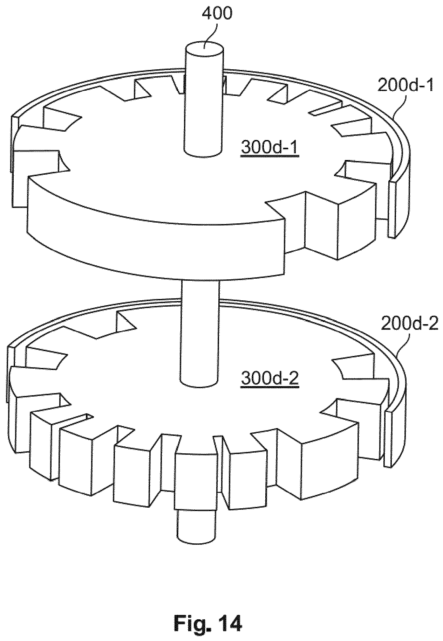

Fig. 14 shows a further alternative geometric arrangement of a receiver section and a coupling element. The shaft 400 defines the axis of rotation. Similar to Figs. 12 and 13, the receiver section is formed as a lateral surface with regard to the axis of rotation. Similar to the solution of Figs. 12 and 13, such a configuration enables an easy connection of the receiver section and coupling element to a device. Such a solution allows that devices can be easily retrofitted.

Different to the solution of Figs 12 and 13 is that the receiver comprises a plurality of receiver sections 200d-1 and 200d-2, e.g. a plurality of k=2 receivers. Such a configuration allows that each of the receiver sections 200d-1 and 200d-2 can cover only a part of the opposing coupling element, e.g. in the case of k=2 receiver section are formed by a half cylinder. Therefore, such a configuration may be advantageous in particularly save spacing.

Further, as shown in Fig 14, the coupling element comprises a plurality of coupling elements 300d-1 and 300d-2, e.g. a plurality of k =2 coupling element, wherein the number of coupling elements is advantageously equal to the number of receiver sections. Each coupling element has a gear like shape. Advantageously, each of the coupling element has an identical shape. Such a configuration allows that by rotating the coupling elements against each other a measurement with full resolution of 2π is possible. In contrast to a single, semicircle sensor (e.g. only receiver segment 200d-1 and coupling element 300d-1), which would result in very poor signals, this solution allows that the signal is improved, as the overall system relies on a signal integrated over the entire circumference of the wheel.

Even if the arrangement with reference to Fig. 14 is only shown for the lateral arrangement of the sensor with respect to the sensor, such a configuration can also be used with the embodiments shown with reference to Figs. 8 to 10. For example, the sensor 200 can sandwich two planar multilayer sensors with U-shaped PCBs.

As used herein, lateral surfaces of an object is all of the sides of the object, excluding its base and top (when they exist). The *lateral surface area* is the area of the lateral surface. This is to be distinguished from the *total surface area*, which is the lateral surface area together with the areas of the base and top. For example, a right circular cylinder of radius r and height h, the lateral area is the area of the side surface of the cylinder: A = 2πrh. This is also referred to as the cylinder surface.

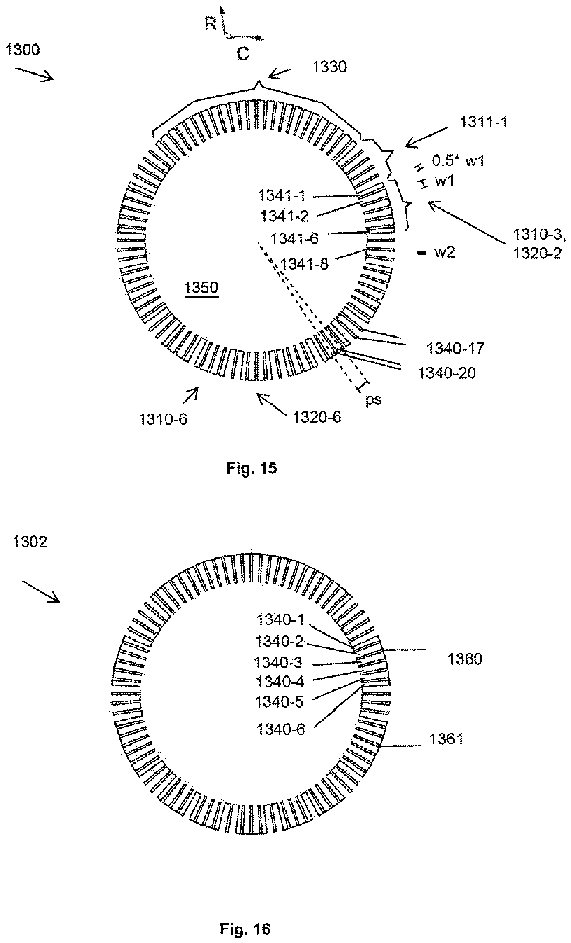

Fig. 15 shows a target 1300, which is a modification of the encoder 300 shown in Fig. 9. In the following, the target 1300 and target 1302, shown in Fig. 16, are referred to as a target according to a first aspect. The target described with reference to Fig. 9 is referred to as a target according to a second aspect.

In particular, each of the conducting teeth of the target according to the second aspect, shown in Fig. 9, is replaced by a conductive zone. For example, the target according to the first aspect as shown in Fig. 15, comprises the conducting zone 1301-3, 1320-2. This zone can be compared with the conducing tooth 310-3, 320-2 shown in Fig. 9. Further, as shown in Fig. 15, the target 1300 comprises the conducing zone 1330. This zone corresponds to the third encoder element 330 shown in Fig. 9. Thus a plurality of N conductive zones is distributed along a measurement range having a dimension Dₜₒₜ in a direction C for providing a general encoder geometry, wherein N is a positive integer.

For example, as shown in Fig. 15, the dimension Dₜₒₜ is a circumferential dimension having a measurement range of 360°. The direction is a circular direction C and is perpendicular to a radial direction R. Thus, an angular sensor can be realized.

In particular, as discussed in connection with the description of Fig. 9, the N conductive zones can be defined by an overlay of a first set of general periodic zones 1310 having a period of Dₜₒₜ /L, including L first general periodic zones, e.g. zone 1310-6, of a dimension less than Dₜₒₜ/L in said direction C, regularly distributed along said measurement range and a second set of general periodic zones 1320 having a period of Dₜₒₜ/(L+r), including L+r second general periodic zones, e.g. zone 1320-6, of a dimension of less than D/(L+r) in said direction C, regularly distributed along said measurement range, where L is an integer grater equal 2 and r is a positive integer and less than L, wherein first and second general conductive zones overlay at least partially which are based on a combination a first set of general periodic.

The description of the first set of general zones is referred to the above description of Fig. 10 showing the first encoder elements 310. The description of the second set of general zones is referred to the above description of Fig. 11 showing the second encoder elements 320. In particular, the first set of general zones 1310 comprises L=9 zones and the second set of general zones 1320 comprises L+r=9+1 =10 zones.

Further, as discussed in connection with the description of Fig. 9, the dimension of each of the L first general conductive zones is less than Dₜₒₜ/(2*L) in said direction C and the dimension of each of the L+r second general conductive zones said in the direction C is less than D ₜₒₜ/(2*(L+r)) in said direction C.

Further, as discussed in connection with Fig. 9, the target for an inductive displacement sensor can comprise one single zone 1330 of the N zones, which has a dimension in the direction C that is larger than the sum of two times the dimension of zones of the first set of zones 1310 and one time the dimension of zones of the second set of zones 1320.

According to the aspect shown with reference to Fig. 15, and in addition to the aspect shown in Fig. 9, the target 1300 comprises a plurality of M periodic sections pₛ for providing a fine encoder geometry. In particular, each periodic section pₛ covers a dimension of Dₜₒₜ/M in said measurement range, wherein M is a positive integer number. Consequently, the measurement range of the general encoder geometry and the fine geometry are overlapping in the direction C. Further, the measurement range of the general encoder geometry and the fine geometry are overlapping in the direction R. In particular, in the example of Fig 15, the measurement ranges are identical.

For example, as shown by the dashed lines in Fig. 15, the target is provided with the periodic section pₛ, the periodic section pₛ covering a dimension of 4°. In total, the target 1300 comprises M=90 sections.

Further, each of the periodic sections pₛ is provided with a conductive pattern. For example, as shown in Fig. 15, periodic section pₛ is provided with the conductive patterns 1340-17 and 1340-20. In particular, the number M of the conductive pattern is greater equal than 2*N. Thus, the target provides a fine encoder pattern with a total number of M pattern.

As shown, in the example in Fig. 15, each conductive pattern is formed by two half wings abutting to one gap. Although not shown in the Figures, a single wing in the periodic section arranged between two gaps may alternatively form a conductive pattern. Further, a plurality of Z teeth, wherein Z is greater equal 3, and plurality of gaps may form a conductive pattern.

In particular, the example shown in Fig. 15 is discussed in the following in detail to explain the first width w1 and the second width w2 in the direction C, the first width w1 and the second width w2 for covering partly the periodic section. For a matter of presentation, in Fig. 15 wings 1341-1, 1341-2, 1341-6, and 1341-8 are indicated with a reference numeral. In particular, the width w of the conductive pattern (and the wings) is not constant within the measurement range. For example, wing 1341-2 has a first width w1. Further, wings 1340-1 and 1340-6 each have the width 0.5* w1, i.e. half the first width w1. Further, the wing 1340-8 has a second width w2 that is not equal the first width w1.

Thus, the example shown in Fig. 15 is a solution that within the N conductive zones, the conductive patterns have a first width w1 in the direction C for covering partly the periodic section pₛ and between the N conductive zones, the conductive patterns have a second width w2 in the direction C for covering partly the periodic section pₛ. Thus, the target provides a general encoder pattern for the N zones.

Further, as shown in Fig. 15, each conductive pattern within the conductive zone is equally shaped. Further, each conductive pattern between the conductive zones is equally shaped. Thus, the fine encoder pattern can be evaluated particularly simple.

As discussed above and shown in Fig. 15, the number M of periodic sections pₛ is 90. In particular, this number is equal to the number L of the first set of conductive zones, which is 9, multiplied with the number L+r of the second set of conductive zones, which is 10.

As further shown in Fig. 15, the second width w2 is equal to the dimension of the periodic section pₛ minus the first width w1. I.e. the wing to gap ration of the conductive zones is equal to the gap to wing ratio of the non-conductive zones.

Further, as shown in Fig. 15, the conductive pattern are conductively connected to a support structure 1350. In particular, the support structure is a disc comprising wings forming the conductive pattern.

According to a further example shown in Fig. 16, the target comprises additionally a plurality of conducting wires. Indicated are conducting wires 1360 and 1361. In particular, within one conductive zone, the conducting wire 1360 short circuits the conductive patterns 1340-1, ..., 1340-6 arranged in this conductive zone in the direction C. In particular, the target 1302 comprises a plurality of N conductive wires equal to the number of conductive zones. In particular, the conducting wires are only provided for conducting zones.

In particular, by the combination of the conductive wire 1360 and the support structure 1350 that is conductively connected to the conductive pattern, the circulation of Eddy currents can be increased in the conductive zones.

For further details of the target according to the first aspect is referred to the above description of the target according to the second aspect, which is described with reference to Figs. 1 to 14.

A corresponding receiver according to a first aspect for the targets 1300 and 1302 according to the first aspect is not shown in the figures. Such a receiver may be derived from Fig. 4 by replacing the receiver coils 222, 224, as shown in Fig. 6, with receiver coils having a period greater equal to two times the period of the receiver coils 212, 214, as shown in Fig. 5.

Additionally, the receiver according to the first aspect can comprise a second general position receiver geometry 220 comprising a second plurality of second general receiver coils 222, 224, each of the second general receiver coils forms a plurality of L+r periodically repeating second general receiver elements distributed along the measurement range in the direction C, wherein r is a positive integer and less than L, and wherein the first and second general receiver geometry are at least partly overlaying. For a detailed description of the additional aspects of such a receiver is referred to the above description of Figs 4 to 6.

For further details of the receiver according to the first aspect is referred to the above description of the receiver according to the second aspect, which is described with reference to Figs. 1 to 14.

A corresponding inductive displacement sensor according to a first aspect for the targets 1300 and 1302 according to the first aspect is not shown in the figures. Such a sensor may be derived from Fig. 1 by changing the periodicity of the target 300 with a target 1300 or target 1302 of the first aspect and a receiver according to the second aspect.

Even if not discussed above in detail, the measurement range can be for example a linear measurement range. For example, the target comprises four conductive zones. Thus, between the conductive zones, three non-conductive zones are provided.

### REFERENCE NUMERALS

| **Reference Numeral** | **Description** |
|---|---|
| 1 | inductive angle sensor |
| 10 | oscillator circuit |
| 20 | evaluation circuit |
| 40 | calibration data generation unit |
| 42 | updating unit |
| 50 | storage unit |
| 60 | controller |
| 100 | exciter coil |
| 200, 200c, 200d-1, 200d-2 | receiver section |
| 210, 220 | receiver geometry |
| 212, 214, 222, 224 | Loop structure |
| 300, 300a, 300b, 300c, 300d-1, 300d-2 | Coupling elements |
| 302a | Tooth |
| 310 | First encoder element |
| 310-1, 320-1 | Conducting teeth |
| 320 | Second encoder element |
| 330 | conducting extension |
| 400 | Shaft |
| 1300 | target |
| 1310 | first general periodic zone |
| 1320 | second general periodic zone |
| 1330 | single zone |
| 1340-20, 1340-17 | conductive pattern |
| 1341-1, 1341-2, ...1341-8 | wing |
| 1350 | conducting support structure |
| 1360, 1361 | conducting wire |

## Claims

1. Target (1300) for an inductive displacement sensor, comprising
a plurality of N conductive zones (1310-3,1320-2) distributed along a measurement range having a dimension D ₜₒₜ in a direction C for providing a general encoder geometry;
a plurality of M periodic sections pₛ for providing a fine encoder geometry, wherein each periodic section pₛ has a dimension of D ₜₒₜ /M in said measurement range and the plurality of periodic sections pₛ overlapping with the measurement range, wherein M and N are positive integer numbers and M is greater than or equal to 2*N;
wherein each of the periodic sections pₛ is provided with a conductive pattern (1340-17, 1340-20) for providing a fine encoder pattern;
wherein within the N conductive zones, the conductive patterns (1340-20) have a first width w1 in the direction C for covering partly the periodic section pₛ;
wherein between the N conductive zones, the conductive patterns (1340-17) have a second width w2 in the direction C for covering partly the periodic section pₛ; and
wherein the first width w1 is larger than the second width w2 for providing a general encoder pattern.

2. Target for an inductive displacement sensor according to claim 1, wherein said N zones being defined by an overlay of a first set of general periodic zones (1310) having a period of D ₜₒₜ /L, including L first general periodic zones (1310-6) of a dimension less than D ₜₒₜ/L in said direction C, regularly distributed along said measurement range, and
a second set of general periodic zones (1320) having a period of D ₜₒₜ/(L+r), including L+r second general periodic zones (1320-6) of a dimension of less than D /(L+r) in said direction C, regularly distributed along said measurement range,
where L is an integer grater equal 2 and r is a positive integer and less than L, wherein first and second general conductive zones overlay at least partially.

3. Target for an inductive displacement sensor according to claim 2,
wherein the dimension of the L first general conductive zones is less than D ₜₒₜ/2*L in said direction C and the dimension of the L+r second general conductive zones said in the direction C is less than D ₜₒₜ/2*(L+r) in said direction C.

4. Target for an inductive displacement sensor according to claim 2 or 3, wherein one single zone (1330) of the N zones has a dimension in the direction C that is larger than the sum of two times the dimension of zones of the first set of zones (1310) and one time the dimension of zones of the second set of zones (1320).

5. Target for an inductive displacement sensor according to any of the preceding claims, wherein the number M of periodic sections pₛ is equal s*N, wherein s is a positive integer greater than or equal to 2.

6. Target for an inductive displacement sensor according to any of claims 2 to 4, wherein the number of M conductive patterns is greater than s*L or s*(I+r), wherein s is a positive integer greater than or equal to 2, optionally wherein the number of M conductive patterns is equal L*(L+r).

7. Target for an inductive displacement sensor according to any of the preceding claims, wherein the second width w2 is equal to the dimension of the periodic section pₛ minus the first width w1.

8. Target for an inductive displacement sensor according to any of the preceding claims, wherein the first width w1 is greater than half the dimension of the periodic section pₛ and less than the dimension of the periodic section p_{s,} preferably the first width w1 is larger equal than 0.6 times the dimension of the periodic section p_{s,} and/or the second width w2 is less than half the dimension of the periodic section pₛ and greater than zero, preferably the second width w2 is less equal than 0.4 the dimension of the periodic section pₛ.

9. Target for an inductive displacement sensor according to any of the preceding claims, wherein the N conductive zones together cover more than 0.4 and less than 0.6 of the measurement range having the dimension D ₜₒₜ in the direction C, preferably cover more than 0.45 and less than 0.55 of the measurement range, even more preferably cover 0.5 of the measurement range.

10. Target for an inductive displacement sensor according to any of the preceding claims, further comprising a conducting wire (1360), wherein within the conductive zone (1310-3, 1320-2), the conducting wire short circuits the conductive patterns (1340-1, ..., 1340-6) arranged in this conductive zone in the direction C, optionally wherein the wire is made of copper, and/or
further comprising a conducting support structure (1350), wherein the M conductive patterns are conductively connected to the support structure.

11. Target for an inductive displacement sensor according to any of the preceding claims, wherein the dimension is a circular dimension.

12. Receiver (200) for an inductive displacement sensor, the receiver comprising a general position receiver geometry (210), the general position receiver geometry comprising a plurality of general receiver coils (212, 214), each of the general receiver coils forms a plurality of L periodically repeating general receiver elements distributed along a measurement range having a dimension D ₜₒₜ in a direction C,
a fine position receiver geometry, the fine position receiver geometry comprising a plurality of fine receiver coils, each of the fine receiver coils forms a plurality of M periodically repeating fine receiver elements distributed along the measurement range,
wherein L is an integer greater than or equal to 2 and M is greater than or equal to 2*L,
an exciter coil (100), the exciter coil surrounds the receiver coils, and the general position receiver geometry and the fine position receiver geometry are at least partly overlaying and
wherein the exciter coil, the general receiver coils, and the fine receiver coils lie in a sensing plane.

13. Receiver according to claim 12, wherein the receiver further comprises a second general position receiver geometry (220) comprising a second plurality of second general receiver coils (222, 224), each of the second general receiver coils forms a plurality of L+r periodically repeating second general receiver elements distributed along the measurement range in the direction C,
wherein r is a positive integer and less than L, and
wherein the first and second general receiver geometry are at least partly overlaying.

14. Receiver according to claim 12 or 13, wherein the receiver further comprises a second fine position receiver geometry, the second fine position receiver geometry comprising a plurality of second fine receiver coils, each of the second fine receiver coils forms a plurality of K periodically repeating fine receiver elements distributed along the measurement range, wherein K is an integer and greater equal than 2*M, and wherein first and second fine receiver geometry are at least partly overlaying.

15. Inductive displacement sensor comprising:
a receiver (200) according to any of claims 12 to 14;
an oscillator circuit (10) that generates a periodic AC signal and couples the AC signal into the exciter coil (100) of the receiver (200);
a target (1300) according to any of claims 1 to 11; and
an evaluation circuit (20) for the evaluation of signals induced in the receiver.

## Patentansprüche

1. Ziel (1300) für einen induktiven Verschiebungssensor, umfassend
eine Vielzahl von N leitenden Zonen (1310-3, 1320-2), die entlang eines Messbereichs mit einer Abmessung D _{ges} in einer Richtung C verteilt sind, um eine allgemeine Kodierergeometrie bereitzustellen;
eine Vielzahl von M periodischen Abschnitten pₛ zum Bereitstellen einer Feincodierergeometrie, wobei jeder periodische Abschnitt pₛ eine Abmessung von D _{ges} /M in dem Messbereich aufweist und die Vielzahl von periodischen Abschnitten pₛ mit dem Messbereich überlappt, wobei M und N positive ganze Zahlen sind und M größer oder gleich 2*N ist;
wobei jeder der periodischen Abschnitte pₛ mit einem leitenden Muster (1340-17, 1340-20) versehen ist, um ein feines Codierermuster bereitzustellen;
wobei innerhalb der N leitenden Zonen die leitenden Muster (1340-20) eine erste Breite w1 in der Richtung C aufweisen, um den periodischen Abschnitt pₛ teilweise abzudecken;
wobei zwischen den N leitenden Zonen die leitenden Muster (1340-17) eine zweite Breite w2 in der Richtung C aufweisen, um den periodischen Abschnitt pₛ teilweise abzudecken; und
wobei die erste Breite w1 größer ist als die zweite Breite w2, um ein allgemeines Kodiermuster bereitzustellen.

2. Ziel für einen induktiven Verschiebungssensor nach Anspruch 1, wobei die N Zonen durch eine Überlagerung eines ersten Satzes von allgemeinen periodischen Zonen (1310) mit einer Periode von D ₜₒₜ/L, einschließlich L erster allgemeiner periodischer Zonen (1310-6) mit einer Abmessung von weniger als D ₜₒₜ/L in der Richtung C, die regelmäßig entlang des Messbereichs verteilt sind, und
einen zweiten Satz von allgemeinen periodischen Zonen (1320) mit einer Periode von D ₜₒₜ/(L+r), einschließlich L+r zweiter allgemeiner periodischer Zonen (1320-6) mit einer Abmessung von weniger als D /(L+r) in der Richtung C, die regelmäßig entlang des Messbereichs verteilt sind,
wobei L eine ganze Zahl größer als 2 und r eine positive ganze Zahl kleiner als L ist, wobei die erste und die zweite allgemeine leitfähige Zone zumindest teilweise überlagert sind.

3. Ziel für einen induktiven Verschiebungssensor gemäß Anspruch 2,
wobei die Abmessung der ersten allgemeinen leitenden Zonen L kleiner als D_{ges}/2*L in der Richtung C ist und die Abmessung der zweiten allgemeinen leitenden Zonen L+r in der Richtung C kleiner als D_{ges}/2*(L+r) in der Richtung C ist.

4. Ziel für einen induktiven Verschiebungssensor gemäß Anspruch 2 oder 3, wobei eine einzelne Zone (1330) der N Zonen eine Abmessung in der Richtung C aufweist, die größer ist als die Summe aus zweimal der Abmessung der Zonen des ersten Satzes von Zonen (1310) und einmal der Abmessung der Zonen des zweiten Satzes von Zonen (1320).

5. Ziel für einen induktiven Verschiebungssensor gemäß einem der vorhergehenden Ansprüche, wobei die Anzahl M der periodischen Abschnitte pₛ gleich s*N ist, wobei s eine positive ganze Zahl größer oder gleich 2 ist.

6. Ziel für einen induktiven Verschiebungssensor gemäß einem der Ansprüche 2 bis 4, wobei die Anzahl M der leitenden Muster größer ist als s*L oder s*(I+r), wobei s eine positive ganze Zahl größer oder gleich 2 ist, wobei die Anzahl M der leitenden Muster optional gleich L*(L+r) ist.

7. Ziel für einen induktiven Verschiebungssensor gemäß einem der vorhergehenden Ansprüche, wobei die zweite Breite w2 gleich der Abmessung des periodischen Abschnitts pₛ minus der ersten Breite w1 ist.

8. Ziel für einen induktiven Verschiebungssensor gemäß einem der vorhergehenden Ansprüche, wobei die erste Breite w1 größer als die Hälfte der Abmessung des periodischen Abschnitts pₛ und kleiner als die Abmessung des periodischen Abschnitts pₛ ist, vorzugsweise ist die erste Breite w1 größer gleich 0, 6-fachen der Abmessung des periodischen Abschnitts p_{s,} und/oder die zweite Breite w2 kleiner als die Hälfte der Abmessung des periodischen Abschnitts pₛ und größer als Null ist, wobei die zweite Breite w2 vorzugsweise kleiner als das 0,4-fache der Abmessung des periodischen Abschnitts pₛ ist.

9. Ziel für einen induktiven Verschiebungssensor gemäß einem der vorhergehenden Ansprüche, wobei die N leitenden Zonen zusammen mehr als 0,4 und weniger als 0,6 des Messbereichs mit der Abmessung D ₜₒₜ in der Richtung C abdecken, vorzugsweise mehr als 0,45 und weniger als 0,55 des Messbereichs abdecken, noch bevorzugter 0,5 des Messbereichs abdecken.

10. Ziel für einen induktiven Verschiebungssensor gemäß einem der vorhergehenden Ansprüche, ferner umfassend einen leitenden Draht (1360), wobei der leitende Draht innerhalb der leitenden Zone (1310-3, 1320-2) die leitenden Muster (1340-1, ..., 1340-6), die in dieser leitenden Zone in der Richtung C angeordnet sind, kurzschließt, wobei der Draht optional aus Kupfer besteht, und/oder
ferner umfassend eine leitende Trägerstruktur (1350), wobei die M leitenden Muster leitend mit der Trägerstruktur verbunden sind.

11. Ziel für einen induktiven Verschiebungssensor gemäß einem der vorhergehenden Ansprüche, wobei die Abmessung eine kreisförmige Abmessung ist.

12. Empfänger (200) für einen induktiven Verschiebungssensor, wobei der Empfänger
eine allgemeine Positionsempfängergeometrie (210), wobei die allgemeine Positionsempfängergeometrie eine Vielzahl von allgemeinen Empfängerspulen (212, 214) umfasst, wobei jede der allgemeinen Empfängerspulen eine Vielzahl von L sich periodisch wiederholenden allgemeinen Empfängerelementen bildet, die entlang eines Messbereichs mit einer Abmessung D _{ges} in einer Richtung C verteilt sind,
eine Feinpositions-Empfängergeometrie, wobei die Feinpositions-Empfängergeometrie eine Vielzahl von Feinempfängerspulen umfasst, wobei jede der Feinempfängerspulen eine Vielzahl von M periodisch wiederkehrenden Feinempfängerelementen bildet, die entlang des Messbereichs verteilt sind, wobei L eine ganze Zahl größer oder gleich 2 ist und M größer oder gleich 2*L ist,
eine Erregerspule (100), wobei die Erregerspule die Empfängerspulen umgibt und
die allgemeine Positionsempfängergeometrie und die Feinpositionsempfängergeometrie sich zumindest teilweise überlagern und
wobei die Erregerspule, die allgemeinen Empfängerspulen und die Feinempfängerspulen in einer Erfassungsebene liegen.

13. Empfänger nach Anspruch 12, wobei der Empfänger ferner
eine zweite allgemeine Positionsempfängergeometrie (220) umfasst, die eine zweite Mehrzahl zweiter allgemeiner Empfängerspulen (222, 224) umfasst, wobei jede der zweiten allgemeinen Empfängerspulen eine Mehrzahl von L+r sich periodisch wiederholenden zweiten allgemeinen Empfängerelementen bildet, die entlang des Messbereichs in der Richtung C verteilt sind,
wobei r eine positive ganze Zahl und kleiner als L ist, und
wobei die erste und die zweite allgemeine Empfängergeometrie sich zumindest teilweise überlagern.

14. Empfänger nach Anspruch 12 oder 13, wobei der Empfänger ferner
eine zweite Feinpositionsempfängergeometrie umfasst, wobei die zweite Feinpositionsempfängergeometrie eine Vielzahl von zweiten Feinempfängerspulen umfasst, wobei jede der zweiten Feinempfängerspulen eine Vielzahl von K sich periodisch wiederholenden Feinempfängerelementen bildet, die entlang des Messbereichs verteilt sind, wobei K eine ganze Zahl größer gleich 2*M ist, und
wobei die erste und die zweite Feinempfängergeometrie sich zumindest teilweise überlagern.

15. Induktiver Verschiebungssensor, umfassend:
einen Empfänger (200) gemäß einem der Ansprüche 12 bis 14;
eine Oszillatorschaltung (10), die ein periodisches Wechselstromsignal erzeugt und das Wechselstromsignal in die Erregerspule (100) des Empfängers (200) einkoppelt;
ein Ziel (1300) gemäß einem der Ansprüche 1 bis 11; und
eine Auswerteschaltung (20) zur Auswertung der im Empfänger induzierten Signale.

## Revendications

1. Cible (1300) pour un capteur de déplacement inductif, comprenant
une pluralité de N zones conductrices (1310-3, 1320-2) distribuées le long d'une plage de mesure ayant une dimension Dₜₒₜ dans une direction C pour fournir une géométrie de codeur général ;
une pluralité de M sections périodiques pₛ pour fournir une géométrie de codeur fin, dans laquelle chaque section périodique pₛ a une dimension Dₜₒₜ/M dans ladite plage de mesure et les sections de la pluralité de sections périodiques pₛ chevauchent la plage de mesure, dans laquelle M et N sont des nombres entiers positifs et M est supérieur ou égal à 2*N ;
dans laquelle chacune des sections périodiques pₛ est pourvue d'un motif conducteur (1340-17, 1340-20) pour fournir un motif de codeur fin ;
dans laquelle, dans les N zones conductrices, les motifs conducteurs (1340-20) ont une première largeur w1 dans la direction C pour recouvrir partiellement la section périodique pₛ ;
dans laquelle, entre les N zones conductrices, les motifs conducteurs (1340-17) ont une deuxième largeur w2 dans la direction C pour recouvrir partiellement la section périodique pₛ ; et
dans laquelle la première largeur w1 est supérieure à la deuxième largeur w2 pour fournir un motif de codeur général.

2. Cible pour capteur de déplacement inductif selon la revendication 1, dans laquelle lesdites N zones sont définies par une superposition d'un premier ensemble de zones périodiques générales (1310) ayant une période Dₜₒₜ/L, comprenant L premières zones périodiques générales (1310-6) de dimension inférieure à Dₜₒₜ/L dans ladite direction C, régulièrement distribuées le long de ladite plage de mesure, et d'un deuxième ensemble de zones périodiques générales (1320) ayant une période Dₜₒₜ/(L+r), comprenant L+r deuxièmes zones périodiques générales (1320-6) d'une dimension inférieure à D/(L+r) dans ladite direction C, régulièrement distribuées le long de ladite plage de mesure,
où L est un entier supérieur ou égal à 2 et r est un entier positif et inférieur à L, dans laquelle les première et deuxième zones conductrices générales se superposent au moins partiellement.

3. Cible pour un capteur de déplacement inductif selon la revendication 2, dans laquelle la dimension des L premières zones conductrices générales est inférieure à Dₜₒₜ/2*L dans ladite direction C et la dimension desdites L+r deuxièmes zones conductrices générales dans la direction C est inférieure à Dₜₒₜ/2*(L+r) dans ladite direction C.

4. Cible pour capteur de déplacement inductif selon la revendication 2 ou 3, dans laquelle une seule zone (1330) des N zones présente une dimension dans la direction C qui est supérieure à la somme de deux fois la dimension des zones du premier ensemble de zones (1310) et d'une fois la dimension des zones du deuxième ensemble de zones (1320).

5. Cible pour un capteur de déplacement inductif selon l'une quelconque des revendications précédentes, dans laquelle le nombre M de sections périodiques pₛ est égal à s*N, dans laquelle s est un entier positif supérieur ou égal à 2.

6. Cible pour un capteur de déplacement inductif selon l'une quelconque des revendications 2 à 4, dans laquelle le nombre M de motifs conducteurs est supérieur à s*L ou à s*(l+r), dans laquelle s est un entier positif supérieur ou égal à 2, éventuellement dans laquelle le nombre M de motifs conducteurs est égal à L*(L+r).

7. Cible pour un capteur de déplacement inductif selon l'une quelconque des revendications précédentes, dans laquelle la deuxième largeur w2 est égale à la dimension de la section périodique pₛ moins la première largeur w1.

8. Cible pour un capteur de déplacement inductif selon l'une quelconque des revendications précédentes, dans laquelle la première largeur w1 est supérieure à la moitié de la dimension de la section périodique pₛ et inférieure à la dimension de la section périodique pₛ, de préférence la première largeur w1 est supérieure ou égale à 0,6 fois la dimension de la section périodique pₛ, et/ou la deuxième largeur w2 est inférieure à la moitié de la dimension de la section périodique pₛ et supérieure à zéro, et de préférence la deuxième largeur w2 est inférieure ou égale à 0,4 fois la dimension de la section périodique pₛ.

9. Cible pour un capteur de déplacement inductif selon l'une quelconque des revendications précédentes, dans laquelle les N zones conductrices couvrent conjointement plus de 0,4 et moins de 0,6 de la plage de mesure ayant la dimension Dₜₒₜ dans la direction C, de préférence couvrent plus de 0,45 et moins de 0,55 de la plage de mesure, et de préférence encore couvrent 0,5 de la plage de mesure.

10. Cible pour un capteur de déplacement inductif selon l'une quelconque des revendications précédentes,
comprenant en outre un fil conducteur (1360), dans laquelle, à l'intérieur de la zone conductrice (1310-3, 1320-2), le fil conducteur court-circuite les motifs conducteurs (1340-1, ..., 1340-6) agencés dans cette zone conductrice selon la direction C, dans laquelle éventuellement le fil est en cuivre, et/ou
comprenant en outre une structure de support conductrice (1350), dans laquelle les M motifs conducteurs sont connectés de manière conductrice à la structure de support.

11. Cible pour un capteur de déplacement inductif selon l'une quelconque des revendications précédentes, dans laquelle la dimension est une dimension circulaire.

12. Récepteur (200) pour un capteur de déplacement inductif, le récepteur comprenant
une géométrie de récepteur de position général (210), la géométrie de récepteur de position général comprenant une pluralité de bobines de récepteur général (212, 214), chacune des bobines de récepteur général formant une pluralité de L éléments de récepteur général à répétition périodique, distribués le long d'une plage de mesure ayant une dimension Dₜₒₜ en direction C,
une géométrie de récepteur de position fin, la géométrie de récepteur de position fin comprenant une pluralité de bobines de récepteur fin, chacune des bobines de récepteur fin formant une pluralité de M éléments de récepteur fin à répétition périodique distribués le long de la plage de mesure, dans lequel L est un entier supérieur ou égal à 2 et M est supérieur ou égal à 2*L,
une bobine d'excitateur (100), la bobine d'excitateur entourant les bobines de récepteur, et la géométrie de récepteur de position général et la géométrie de récepteur de position fin se superposant au moins partiellement, et
dans lequel la bobine d'excitateur, les bobines de récepteur général et les bobines de récepteur fin se trouvent dans un plan de détection.

13. Récepteur selon la revendication 12, dans lequel le récepteur comprend en outre
une deuxième géométrie de récepteur de position général (220) comprenant une deuxième pluralité de deuxièmes bobines de récepteur général (222, 224), chacune des deuxièmes bobines de récepteur général formant une pluralité de L+r deuxièmes éléments de récepteur général à répétition périodique distribués le long de la plage de mesure dans la direction C,
dans lequel r est un entier positif inférieur à L, et
dans lequel les première et deuxième géométries de récepteur général se superposent au moins partiellement.

14. Récepteur selon la revendication 12 ou 13, dans lequel le récepteur comprend en outre
une deuxième géométrie de récepteur de position fin, la deuxième géométrie de récepteur de position fin comprenant une pluralité de deuxièmes bobines de récepteur fin, chacune des deuxièmes bobines de récepteur fin formant une pluralité de K éléments de récepteur fin à répétition périodique distribués le long de la plage de mesure, dans lequel K est un entier supérieur ou égal à 2*M, et
dans lequel les première et deuxième géométries de récepteur fin se superposent au moins partiellement.

15. Capteur de déplacement inductif comprenant :
un récepteur (200) selon l'une quelconque des revendications 12 à 14 ;
un circuit oscillateur (10) qui génère un signal CA périodique et couple le signal CA dans la bobine d'excitateur (100) du récepteur (200) ;
une cible (1300) selon l'une quelconque des revendications 1 à 11 ; et
un circuit d'évaluation (20) pour l'évaluation des signaux induits dans le récepteur.
